(19) Europäisches Patentamt
European Patent Office
Office européen des brevets

(11) Numéro de publication: **0 110 034**
**B1**

# (12) FASCICULE DE BREVET EUROPEEN

(45) Date de publication du fascicule du brevet: **10.12.86**

(51) Int. Cl.⁴: **C 11 B 9/00**, A 23 L 1/226, A 23 L 2/26, A 61 K 7/46

(21) Numéro de dépôt: **83109130.1**

(22) Date de dépôt: **15.09.83**

## (54) Utilisation d'une cétone sesquiterpénique en tant qu'ingrédient parfumant et aromatisant.

(30) Priorité: **02.11.82 CH 6361/82**

(43) Date de publication de la demande:
**13.06.84 Bulletin 84/24**

(45) Mention de la délivrance du brevet:
**10.12.86 Bulletin 86/50**

(84) Etats contractants désignés:
**CH DE FR GB LI**

(56) Documents cités:
**DE - A - 1 934 374**
**US - A - 3 880 931**

**TETRAHEDRON LETTERS, no. 52, 1965, pages 4779-4783, Pergamon Press, Ltd., Oxford, GB; W.D. MacLEOD Jr.: "The constitution of nootkatone, nootkatene and valencene"**
**M.G.J. BEETS: "Structure - activity relationships in human chemoreception", 1978, pages 138-140, Applied Science Publishers Ltd., Londres, GB**

(73) Titulaire: **FIRMENICH SA, 1, route des Jeunes, CH-1211 Genève 8 (CH)**

(72) Inventeur: **Demole, Edouard Paul, Dr., 22, chemin des Grands Huttins, CH-1296 Coppet (CH)**
Inventeur: **Enggist, Paul, 39, chemin Moise Duboule, CH-1209 Geneve (CH)**

(74) Mandataire: **Salvadori, Giuseppe, Dr., c/o Firmenich S.A. Case Postale 239, CH-1211 Genève 8 (CH)**

**EP 0 110 034 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à l'industrie des parfums et à celle des arômes. Elle a plus particulièrement pour objet un composé de formule

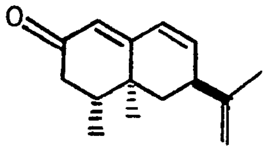

(I)

ou 4,4a,5,6-tétrahydro-6β- isopropényl-4α,4aα-diméthyl-2 (3H)- naphtalènone (définie ci-après «déhydronootkatone»).

La nootkatone, un composé de formule

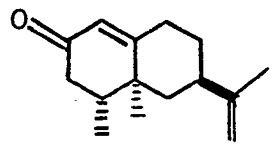

est une cétone sesquiterpénique d'origine naturelle à odeur légèrement âcre. Elle contribue à la caractéristique note gustative du pamplemousse (Citrus paradisi), et de ce fait elle constitue un ingrédient essentiel pour la reconstitution des arômes de ce fruit.

Nous avons maintenant découvert que la déhydronootkatone de formule (I) non seulement possédait des propriétés organoleptiques fort intéressantes, et dont la nature s'apparentait à celle de la nootkatone citée, mais qu'elle était dotée d'une puissance aromatisante remarquable, bien supérieure à celle montrée par la nootkatone même.

La déhydronootkatone sert donc à développer des notes gustatives juteuses, fruitées, florales et boisées, voire vertes et soufrées. Son caractère rappelle fortement celui du pamplemousse ou, de façon plus générale, celui de certains fruits tropicaux.

Son utilité par ailleurs ne se limite pas au domaine des arômes, mais elle s'étend àgalement à celui de la parfumerie. La déhydronootkatone sert en effet à la manufacture de compositions parfumantes de nature variée, notamment de type agrume ou fruité. C'est ainsi qu'elle peut trouver un emploi lors de la reconstitution de compositions comportant l'huile essentielle des bergamote comme constituant actif.

Dans le domaine des arômes, les proportions dans lesquelles la déhydronootkatone peut exercer un effet gustatif peuvent varier dans une gamme étendue de valeurs, généralement cependant elles sont de l'ordre de quelques parties par million (ppm) par rapport au poids total de l'aliment ou la boisson aromatisés. Des concentrations de l'ordre de 0,1–0,2 ppm suffisant à conférer aux produits auxquels elle a été ajoutée en effet aromatisant.

Bien entendu, ces valeurs de concentrations peuvent être bien plus élevées lors de la manufacture d'arômes concentrés. De par ses propriétés aromatisants, la déhydronootkatone trouve une utilisation étendue dans l'aromatisation d'aliments et boissons en général, tout partiuculièrement cependant en tant que renforçateur de jus de fruit, notamment de type agrumes, spécialement le pamplemousse. Elle peut également trouver un emploi en tant qu'ingrédient dans des arômes destinés à être incorporés dans des produits de confiserie, de boulangerie, dans des confitures, des produits à base de lait, des yogourts par exemple.

La déhydronootkatone (I) est un composé d'origine naturelle. Elle a été maintenant isolée pour la première fois du jus de grapefruit: elle représente en effet un des constituants de la partie volatile de son arôme.

Pour son isolement, on a eu recours a un procédé fort complexe, procédé qui fait appel à plusieurs techniques de séparation comprenant entre autres une distillation à la vapeur assortie d'extraction en continu sous pression réduite au moyen d'un appareil de type Likens et Nickerson. C'est ainsi qu'on a pu obtenir un arôme volatil de bonne qualité représentant 0,0078% du poids total du jus traité. La fraction ainsi obtenue a été soumise à une séquence de séparations chromatographiques et les différentes fractions ont été examinées par chromatographie gazeuse semi-préparative associée au couplage gaz-chromatographie/spectrométrie de masse. Une telle analyse a permis non seulement de confirmer la présence dans l'arôme volatil de bon nombre de constituants déjà connus (127) mais aussi d'isoler toute une série de constituants nouveaux (150), dont la présence n'avait pas été soupçonnée auparavant.

L'état de la technique représentant à ce jour l'ensemble des connaissances relative à l'arôme de pamplemousse est résumée dans le périodique édité par les soins du TNO, Volatile Compounds in Food (supplement 6), S. van Straten (1981), Sec. s 5.9 et 5.10.

Parmi les constituants mineurs nouvellement isolés figurait un composé particulièrement intéressant auquel nous avons attribué la structure illustrée par la formule (I). Ce composé avait été décrit dans la littérature scientifique en tant que produit intermédiaire de synthèse dans une étude relative à la structure de la nootkatone, sans pour autant que ses propriétés organoleptiques y aient été mentionnées ou voir même suggérées. [voir W. D. Mac Leod, Jr., Tetrahedron Letters 52, 4779–4783 (1965)]. La présence de déhydronootkatone avait donc échappé aux nombreux chercheurs qui s'étaient penchés sur le problème.

La déhydronootkatone n'est présente dans l'arôme volatil de pamplemousse qu'à raison d'environ 0,0015% de son poids total, sa concentration dans le jus étant d'environ 1,1 ppb (parties par milliard).

Grâce à ses propriétés organoleptiques particulières, la déhydronootkatone possède des possibilités d'applications très vastes, nettement plus diversifiées que celles offertes par le jus de pamplemousse ou ses concentrés, ainsi que par la

nootkatone déjà connue. Au moyen d'un procédé de synthèse, industriellement et économiquement bien plus avantageux que l'isolation à partir du jus naturel, il est désormais possible de mettre à la disposition du parfumeur ou de l'aromatiseur une déhydronootkatone pure, notamment exempte d'autres substances naturelles pouvant en modifier les caractères olfactifs et aromatisants propres. La déhydronootkatone peut ainsi être préparée selon la méthode décrite par Mac Leod (op. cit.) à partir de la nootkatone par oxydation, dans l'acide acétique, de celle-ci avec le chloranile.

L'invention est illustrée d'une manière plus détaillée par les exemples qui suivent sans pour autant leur être limitée.

Exemple 1
Sirop

La déhydronootkatone a été soumise à une évaluation organoleptique de la part d'un group d'experts. A cet effet elle a été incorporée à raison de 5 ppm dans un sirop acidulé, préparé en dissolvant 650 g de saccharose dans 1 l d'eau de source contenant 0,25% d'acide citrique. La boisson ainsi obtenue possédait, au dire des experts, un caractère fruité, floral et boisé. Elle montrait une note typique de pamplemousse, juteuse, verte et soufrée.

Exemple 2
Huile essentielle de pamplemousse

Une essence de pamplemousse de Floride, 5 fois concentrée (échantillon «témoin») et une essence de même source et qualité contenant de la déhydronootkatone à raison de 3% en poids (échantillon «test»), ont été utilisées à une concentration de 100 ppm pour aromatiser un sirop acidulé obtenu par dissolution de 650 g de saccharose dans 1 l d'eau de source contenant 0,25% d'acide citrique. La boisson aromatisée avec l'échantillon «test» présentait une odeur et un arôme plus frais, plus fruité et juteux que ceux de la boisson aromatisée à l'aide de l'échantillon «témoin». Elle avait en résumé un caractère naturel plus typique de jus de pamplemousse.

Exemple 3
Jus de pamplemousse

Un jus de pamplemousse pasteurisé commercial (qualité «single strength») a été aromatisé à l'aide de déhydronootkatone à raison de 1,2 et 3 ppm, respectivement. Les boissons ainsi obtenues ont été évaluées par un groupe d'experts lesquels ont exprimé leur avis en indiquant que les boissons aromatisées possédaient un arôme plus complet, plus juteux, frais et harmonieux que celui de l'échantillon non aromatisé. L'échantillon aromatisé avec 3 ppm de déhydronootkatone était cependant surdosé.

## Revendications

1. Utilisation de 4,4a,5,6-tétrahydro-6β-isopropényl-4α,4aα- diméthyl-2 (3H)-naphtalénone («déhydronootkatone») à titre d'ingrédient parfumant ou aromatisant.

2. Utilisation selon la revendication 1 pour renforcer ou améliorer les qualités organoleptiques des boissons à base de pamplemousse ou imitant de pamplemousse.

## Patentansprüche

1. Verwendung von 4,4a,5,6-Tetrahydro-6β-isopropenyl-4α,4aα- dimethyl-2(3H)- naphtalenon («Dehydronootkaton») als Parfüm- oder Aroma-Bestandteil.

2. Verwendung gemäss Anspruch 1 um die organoleptischen Eigenschaften von Pamelmuse- oder Pampelmuse-Ersatzgetränken zu verstärken oder verbessern.

## Claims

1. Utilization of 4,4a,5,6-tetrahydro-6β-isopropenyl-4α,4aα- dimethyl-2(3H)- naphthalenone («dehydronootkatone») as a perfume or a flavour ingredient.

2. Utilization according to claim 1 to reinforce or improve the organoleptic properties of grapefruit or grapefruit imitatint beverages.